# EUROPEAN PATENT APPLICATION

(11) **EP 2 241 910 A2**
(43) Date of publication of application: **20.10.2010**
(21) Application number: 10159817.5
(22) Date of filing: 13.04.2010
(51) Int. Cl.: G02B 5/20

(54) **ND filter and television camera, and manufacturing method of ND filter**

(30) Priority: 14.04.2009 JP 2009097868; 25.08.2009 JP 2009194682; 03.02.2010 JP 2010022109
(71) Applicant: Nippon Hoso Kyokai, Tokyo 150-8001 (JP); Fujinon Corporation, Saitama-shi Saitama 331-9624 (JP)
(72) Inventor: Mitsuhashi, Seiji, Tokyo 150-8001 (JP); Yamazaki, Junichi, Tokyo 150-8001 (JP); Odawara, Kuniharu, Miyagi 980-8435 (JP); Saita, Arihiro, Saitama 331-9624 (JP); Isozaki, Makoto, Saitama 331-9624 (JP); Ozaki, Takao, Saitama 331-9624 (JP)
(74) Representative: Klunker . Schmitt-Nilson . Hirsch

(57) **Abstract**

The present invention provides an ND filter and a television camera which can obtain a video with favorable quality which does not give sense of discomfort to viewers, and a manufacturing method of the ND filter. In an ND filter (10) of the present invention, a first region (34) with a light transmittance of about 100% and a second region (36) with a light transmittance continuously changing stepwise are continuously formed in a circumferential direction of a transparent glass board (32) formed in a disk shape. Therefore, image light transmits through all regions of the transparent glass board (32). Thereby, at the time of operation of light amount regulation, a region through which the image light does not transmit does not traverse a passage area (50) of the image light, and therefore, a screen does not become dark momentarily at the time of operation of light amount regulation. Therefore, by using the ND filter (10), a video with favorable quality without giving sense of discomfort to viewers can be obtained.

## Description

### BACKGROUND OF THE INVENTION

### Field of the Invention

The present invention relates an ND (Neutral Density) filter particularly set in a television camera, a television camera including the ND filter, and a manufacturing method of the ND filter.

### Description of the Related Art

When moving to the dark interior of a building from the bright outdoors or to the bright outdoors from the dark interior of the building while continuing photographing by using a television camera such as an ENG (Electronic News Gathering) television camera, it is necessary to prevent degradation of video quality due to excess and deficiency of the amount of received light.

Thus, as in Japanese Patent Application Laid-Open No. 9-93485, a turret plate with an ND filter for regulating the amount of received light stepwise is conventionally provided between the photographing lens system and the color separation optical system of a television camera, and the turret plate with the ND filter is rotated to traverse the photographing optical axis, whereby the filter with a predetermined density is located on the photographing optical axis to regulate the received light amount to a desired received light amount.

In a turret plate with an ND filter, for example, four apertures are formed equidistantly in the circumferential direction, and for example, a filter with a light transmittance of 100% (a mere aperture may be adopted), a filter with a light transmittance of 25%, a filter with a light transmittance of 6.3%, and a filter with a light transmittance of 1.6% are set to these apertures. Therefore, the filter with a light transmittance of 25%, 6.3% or 1.6% is located on the photographing optical axis outdoors, and when moving into the interior of a building, the turret plate with the filters is rotated, so that the filter with a light transmittance of 100% is located on the photographing optical axis.

However, in the light received amount regulating device using the turret plate with the ND filter, when the turret plate with a filter is rotated at the time of operation of received light amount regulation, an opaque plate portion which is not equipped with the filter traverses the passage area of image light, and therefore, there is the problem that the screen becomes dark momentarily, the video quality degrades and sense of discomfort is given to viewers.

### SUMMARY OF THE INVENTION

The present invention is made in view of such circumstances, and has an object to provide an ND filter and a television camera which can obtain favorable video with a quality which does not give sense of discomfort to viewers, and a manufacturing method of the ND filter.

In order to attain the above-described object, the present invention provides an ND filter, comprising: a transparent board formed in a disk shape, wherein two or more regions having light transmittances differing stepwise from one another are continuously formed in a circumferential direction of the transparent board formed in a disk shape.

According to the ND filter of the present invention, in the case of use in a place with a small amount of surrounding light as in the interior of a building, the region with a high light transmittance as about 100%, for example, is used, whereas at the time of moving to a place with a large amount of surrounding light such as outdoors under a clear sky from the interior of a building, a desired region with a low light transmittance is used in accordance with change in the amount of surrounding light among the regions with the light transmittances continuously changed stepwise, and photographing is performed with a suitable amount of light.

In the ND filter of the present invention, two or more regions with the light transmittances differing from one another stepwise are continuously formed in the circumferential direction of the transparent board, and therefore, light transmits through all the regions of the transparent board. Thereby, at the time of operation of light amount regulation, the region through which light does not transmit does not traverse the passage area of image light, and therefore, the screen does not momentarily become dark at the time of operation of light amount regulation. Therefore, by using the ND filter of the present invention, a video with favorable quality which does not give sense of discomfort to viewers can be obtained.

According to the present invention, the transparent board is preferably a glass board or a resin board. By adopting a glass board or a resin board, the transparent board of the present invention can be easily manufactured.

Further, when an antireflection film is not formed on the ND filter, the reflected light causes a ghost, and the video quality degrades. As the countermeasures against this, there is the method for causing reflected light to escape outside the optical axis by disposing the ND filter so as not to be perpendicular to the optical axis. However, when the filter is disposed so as not to be perpendicular to the optical axis, another degradation of video quality which is called astigmatic difference may be caused. Further, when the filter is disposed so as not to be perpendicular to the optical axis, the device is upsized, and therefore, the disadvantage against the request for downsizing from users occurs.

According to the present invention, an antireflection film is preferably formed on surfaces of the two or more regions. Since reflection of photographing light can be suppressed by the antireflection film, occurrence of ghost can be suppressed, and an image with favorable quality can be provided.

Further, the ND filter of the present invention is preferably such that in all regions in which the transparent board is equipped with an ND coat, a first region with a lowest transmittance of all the regions is equipped with an ND coat of a first layer, the first region and a second region with a second lowest transmittance are equipped with an ND coat of a second layer, whereby a plurality of ND coats are stacked in layers in a thickness direction on the regions except for a region with a highest transmittance, and a surface layer of the entire transparent board is equipped with the antireflection film.

Further, the ND filter of the present invention is preferably such that in all regions in which the transparent board is equipped with an ND coat, all the regions are equipped with an ND coat of a first layer, regions except for a region with a highest transmittance of all the regions are equipped with an ND coat of a second layer, whereby a plurality of ND coats are stacked in layers in a thickness direction on the regions except for the region with the highest transmittance, and a surface layer of the entire transparent board is equipped with the antireflection film.

According to the present invention, the problem of the edges of the adjacent ND coats overlapping, and the problem of occurrence of a gap can be eliminated, and therefore, even if the brightness of the photographing environment changes momentarily, a video without sense of discomfort can be provided without discontinuing the video after a ghost is prevented.

Further, according to the present invention, the ND coat is preferably an absorption layer group in which a plurality of dielectric layers and metal absorption layers are alternately stacked in layers.

According to the present invention, the reflectivity can be suppressed to less than 2% which is required for the optical component of a camera, for example, by the interference action of light by the dielectric layers and the metal absorption layers alternately stacked in layers, and the light transmittance can be regulated by a plurality of metal absorption layers.

Further, refraction indexes of the transparent board and a dielectric layer to be a surface of the absorption layer group are preferably substantially the same.

According to the present invention, a common antireflection film is added to the transparent board and the absorption layer group, and therefore, the refraction indexes of the transparent board which is the base part of the antireflection film and the surface of the surface of the absorption layer group are idealistically the same, but by making them substantially the same, the common antireflection film can be adopted.

Further, the present invention is preferably such that materials of members located on an interface between the stacked absorption layer groups are the same.

According to the present invention, by adopting the same material for the members located on the interface of the absorption layer groups when the absorption layer groups are stacked in layers, the joints between the absorption layer groups have the same refraction index. Therefore, the layer of one substance is made optically, the interference action can be controlled by setting the thickness of the dielectric layer to be optimum.

The transparent board according to the present invention is preferably a glass board, at the peripheral edge portion of which a ring-shaped frame member is attached. A recessed portion is preferably provided at the peripheral edge portion of the frame member.

According to the present invention, the material of the frame member is preferably metal or resin.

According to the present invention, a housing is preferably provided, which rotatably supports the ND filter by using the center of the ND filter as the center of rotation, and in which an urging member engaging with the recessed portion of the frame member with its urging force is provided.

When the ND filter according to the present invention is mounted to a camera or a lens, a positioning device which positions each of the divided regions of the ND filter on the photographing optical axis is particularly needed in the case of a configuration in which the ND filter is manually operated.

As the positioning device, it can be considered that recessed portions are provided at the peripheral edge portion of the glass board, and that the urging member for positioning which engages with the recessed portion is provided on the housing side of the ND filter. That is, when the urging member is made to engage with the recessed portion by rotating the disc-shaped ND filter about the center thereof, a predetermined region of the ND filter is positioned on the photographing optical axis. That is, the predetermined region is positioned on the photographing optical axis by making the urging member engage with the recessed portion to stop the rotation of the ND filter. The recessed portions are provided in correspondence with the number of the divided regions. For example, the recessed portions are provided at two places in the case where the region is divided into two regions. The recessed portions are provided at three places in the case where the region is divided into three regions, and the recessed portions are provided at four places in the case where the region is divided into four regions. Note that in the case where the areas (division angles) of the respective divided regions are equal to each other, the recessed portions are provided at the peripheral edge portion of the ND filter at equal intervals.

Meanwhile, in the case where the recessed portions are to be directly provided at the peripheral edge portion of the disc-shaped glass board, the following problems are caused.

First, it is difficult to work the glass board so as to form the recessed portion thereon. That is, the recessed portion is formed by cutting the peripheral edge portion of the glass board by a rotating grinding wheel. However, it is very difficult to perform the cutting work without causing a chipping and a notch at the recessed portion at the time of the cutting work. Further, when the chipping and the notch are caused at the recessed portion, the glass board itself may be broken from the recessed portion as the starting point.

Next, since the urging force of the urging member is directly transmitted to the glass board, the glass board is distorted so that the flatness of the glass board is deteriorated. This includes a problem that the optical characteristics of the ND filter are deteriorated.

Further, the peripheral edge portion of the glass board, which portion is the sliding surface of the urging member, is easily scraped by the urging force of the urging member. This includes a problem that the glass powder produced by the scraping adheres to the other optical members to deteriorate the optical performance of a camera or a lens. As the urging member, a leaf spring made of a spring steel material can be exemplified.

Thus, in the present invention, in order to solve the above described problems, a ring-shaped frame member is provided at the peripheral edge portion of the glass board, and recessed portions with which the urging member is engaged are provided on the frame member. Thereby, it is possible to solve the above described problems, that is, the problem associated with the working, the problem of deterioration of the optical characteristics of the ND filter, and the problem of deterioration of the optical performance of the camera and the lens. Therefore, the ND filter according to the present invention can be excellently used by being mounted to the camera or the lens.

As the material of the frame member, a metal, such as aluminum and stainless steel, or a resin, such as reinforced polycarbonate containing glass fibers having high hardness and stiffness, is preferably used. Since the frame member made of such a material can be easily worked to form the recessed portions thereon, it is possible to solve the problem associated with the working. Further, since the glass board is reinforced by the frame member, the above described distortion of the glass board can be prevented, and thereby the problem of deterioration of the optical characteristics of the ND filter can be solved. Further, since the frame member is not easily scraped by the urging force of the urging member, the problem of deterioration of the optical characteristics of the lens can also be solved. Note that in order to reduce the sliding resistance between the urging member and the frame member, when the frame member is made of the metal, the peripheral edge portion of the frame member, which portion is the sliding surface of the urging member, is preferably coated with a resin material having lubricity.

When the frame member is made of the metal, the glass board and the frame member can be bonded with an adhesive, so as to be integrated with each other. When the frame member is made of the resin, the frame member can also be fixed to the glass board with an adhesive. However, from a viewpoint of mass productivity, the resin is preferably molded on the peripheral edge portion of the glass board so that the glass board is integrated with the frame member.

In order to attain the above described object, the present invention provides a television camera characterized by being equipped with the ND filter of the present invention.

Thereby, according to the television camera of the present invention, video with favorable quality which does not give sense of discomfort to viewers can be obtained.

In order to attain the above described object, the present invention provides a manufacturing method of an ND filter in which two or more regions having light transmittances differing stepwise from one another are continuously formed in a circumferential direction of a transparent board formed in a disk shape, and an antireflection film is formed on surfaces of the two or more regions, comprising the steps of: in all regions in which the transparent board is equipped with an ND coat, firstly, forming an ND coat of a first layer on a first region with a lowest transmittance of all the regions; secondly, forming an ND coat of a second layer on the first region and a second region with a second smallest transmittance, whereby a plurality of ND coats are stacked in layers in a thickness direction on the regions except for a region with a highest transmittance; and finally, forming the antireflection film on the entire transparent board to manufacture the ND filter.

In order to attain the above described object, the present invention provides a manufacturing method of an ND filter in which two or more regions having light transmittances differing stepwise from one another are continuously formed in a circumferential direction of a transparent board formed in a disk shape, and an antireflection film is formed on surfaces of the two or more regions, comprising the steps of: in all regions in which the transparent board is equipped with an ND coat, firstly, forming an ND coat of a first layer on all the regions; secondly, forming an ND coat of a second layer on regions except for a region with a highest transmittance of all the regions, whereby a plurality of ND coats are stacked in layers in a thickness direction on the regions except for the region with the highest transmittance; and finally, forming the antireflection film on the entire transparent board to manufacture the ND filter.

The antireflection film is also formed on the region which does not include the ND coat in the transparent board. The expression of stacking of "the first layer, the second layer" of the ND coat includes the expression of stacking when the ND coat is of a multiple-layer structure constituted of a plurality of layers, and the expression of stacking of the first layer and the second layer when the ND coat is of a single-layer structure.

As described above, according to the ND filter and the television camera, and the manufacturing method of the ND filter according to the present invention, the region through which light does not transmit does not traverse the passage area of image light at the time of operation of light amount regulation, and therefore, the screen does not momentarily become dark at the time of operation of light amount regulation.
Therefore, a video with favorable quality which does not give sense of discomfort to viewers can be obtained.

### BRIEF DESCRIPTION OF THE DRAWINGS

Fig. 1 is a side view of an ENG television camera equipped with an ND filter according to an embodiment;
Fig. 2 is an explanatory view showing an arrangement constitution of the ND filter and a color separation prism shown in Fig. 1;
Figs. 3A and 3B are explanatory views of a filter rotating mechanism of the ND filter shown in Fig. 1;
Fig. 4 is a front view of the ND filter shown in Fig. 1;
Fig. 5 is a sectional development view of the ND filter shown in Fig. 4;
Fig. 6 is a vertical sectional view of the ND filter shown in Fig. 4;
Fig. 7 is an explanatory view showing one absorption layer group in which dielectric layers and metal absorption layers are alternately stacked;
Fig. 8 is a sectional view of the ND filter showing the order of depositing the absorption layer group of Fig. 7 on a transparent glass board;
Fig. 9 is a sectional view showing a jig for depositing the absorption layer group of Fig. 7 on a base material;
Figs. 10A to 10D are plane views showing four kinds of jigs differing in the size of the aperture;
Figs. 11A to 11D are graphs showing the relationship of the reflectivity and the light transmittance with respect to the wavelength when the light transmittance of 1/4° is changed in three stages;
Fig. 12 is a mathematical table showing the refractive index and thickness of each layer of the ND filter of Figs. 11A to 11D;
Figs. 13A to 13D are graphs showing the relationship of the reflectivity and light transmittance with respect to the wavelength when the light transmittance is changed in three stages;
Fig. 14 is a mathematical table showing the refractive index and the thickness of each of layers of the ND filter of Figs. 13A to 13D; and
Fig. 15 is a sectional view of the ND filter showing another order of depositing the absorption layer group of Fig 7 on the base material.
Fig. 16 is a front view of the ND filter 10 in which a ring-shaped frame member is attached to the peripheral edge portion of the transparent glass board;
Fig. 17 is a left side view of Fig. 16;
Fig. 18 is a sectional view of a main portion of Fig. 16; and
Fig. 19 is a sectional view of the ND filter, showing a structure for fixing the glass board to the frame member.

### DETAILED DESCRIPTION OF THE PREFERRED EMBODIMENTS

A preferred embodiment of an ND filter and a television camera, and a manufacturing method of the ND filter according to the present invention will be described in detail hereinafter in accordance with the attached drawings. The television camera includes movie cameras in general in addition to cameras for film making and home video cameras.

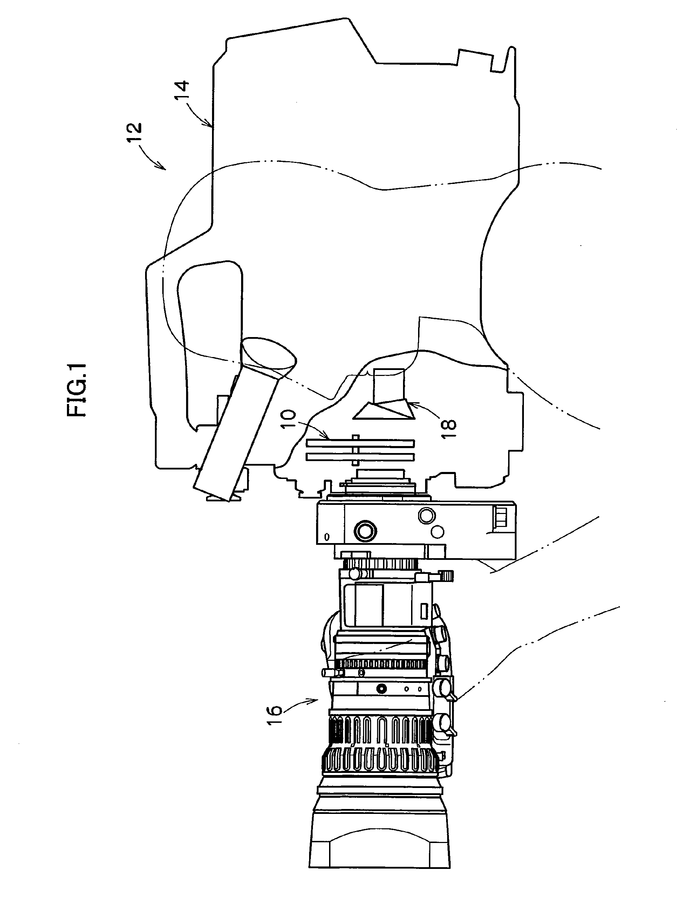

Fig. 1 is a side view of an ENG television camera 12 equipped with an ND filter 10 according to the embodiment. The ENG television camera 12 shown in Fig. 1 is constituted of a camera main body 14 and a lens device 16 shown by the solid line in Fig. 1. The ND filter 10 also can be equipped in the other television cameras such as an HD (High Definition) television camera without being limited to the ENG television camera. Further, in the embodiment, the mode of the ND filter 10 incorporated in the camera main body 14 is shown, but the ND filter 10 may be made in the form of an adapter, and may be constructed to be attachable and detachable to and from between the camera main body 14 and the lens device 16.

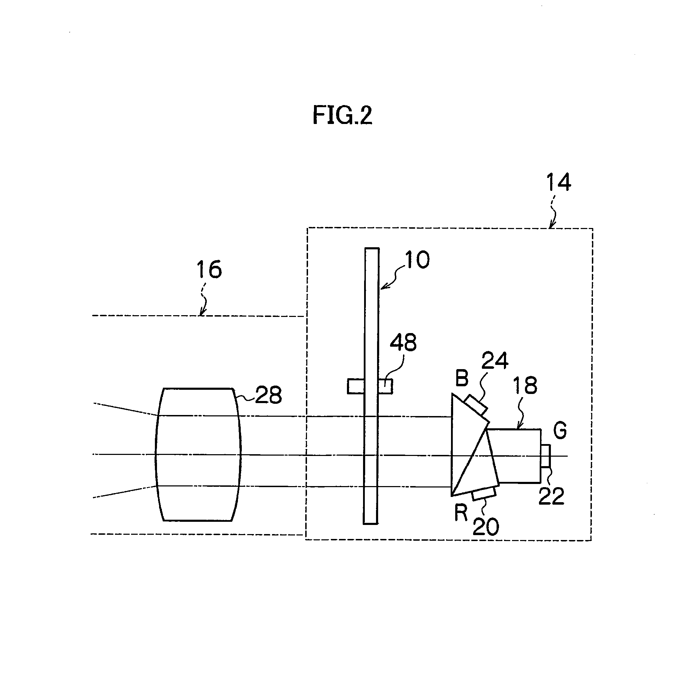

Meanwhile, the camera main body 14 is a shoulder type press camera. Further, the image light which passes through the lens device 16 passes through the ND filter 10, and passes through a color separation prism 18 which constitutes a color separation optical system, whereby the image light is subjected to color separation into three colors of R, G and B, which reach imaging elements 20, 22 and 24 provided at respective radiant ends of R, G and B of the color separation prism 18 as in Fig. 2. Further, the camera main body 14 is loaded with a signal processing circuit (not illustrated) or the like which generates a video signal of a predetermined mode (NTSC or the like) by applying predetermined processing (white balance, y correction and the like) to the imaging signals obtained from the imaging elements 20, 22 and 24.

The ND filter 10 is a received light amount regulating device which regulates the amount of light of a subject image which passes through the lens device 16 as in Fig. 1 and an optical system 28 of Fig. 2 fitted to the lens device 16, and regulates the amount of received light caused to form images in the imaging elements 20, 22 and 24. Note that in the embodiment, a form in which the ND filter 10 is incorporated in the camera main body 14 is shown, but the ND filter 10 may be incorporated in the lens device 16. Further, the ND filter 10 may also be configured as an adaptor so as to be detachably attached between the camera main body 14 and the lens device 16.

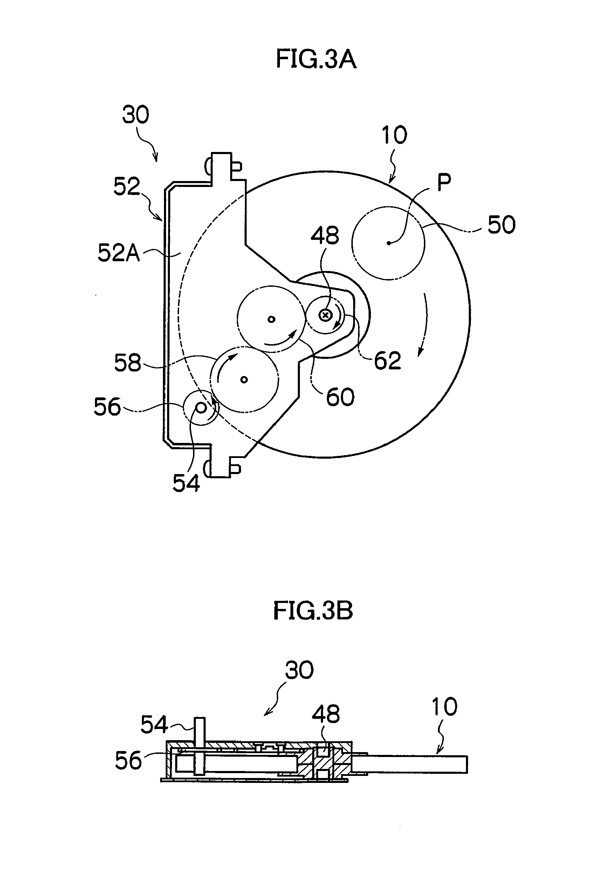

Figs. 3A and 3B are a front view and a cross-sectional view showing a filter rotating mechanism 30 of the ND filter 10. Here, the front view of the filter rotating mechanism 30 refers to the view of the filter rotating mechanism 30 seen from the lens device 16 side.

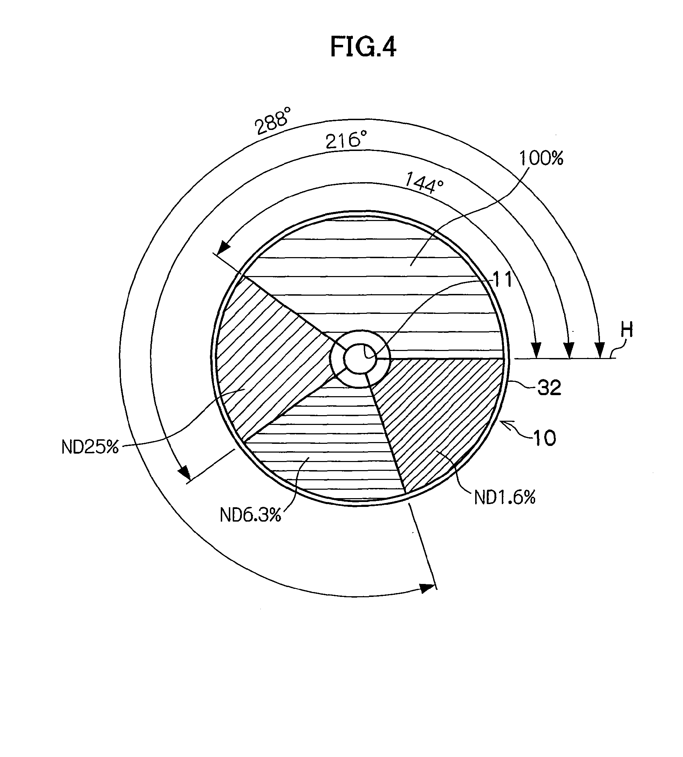

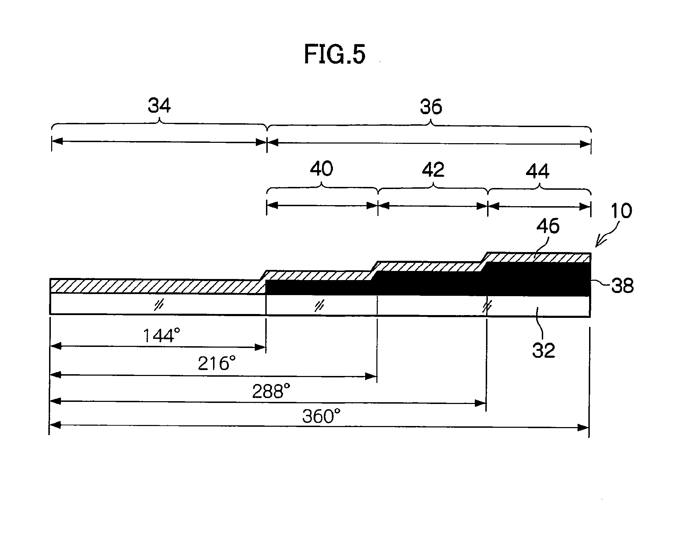

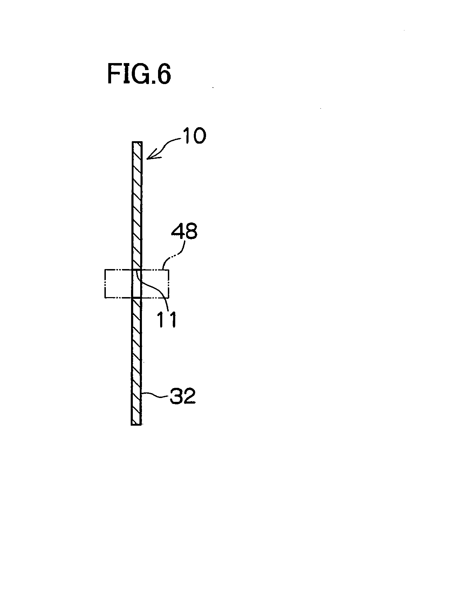

Further, Fig. 4 is a front view of the ND filter 10, Fig. 5 is a developed sectional view of the ND filter 10, and Fig. 6 is a vertical sectional view of the ND filter 10.

As shown in Figs. 4 and 5, in the ND filter 10, a transparent glass board 32 formed into a disk shape is used as a base material, a first region 34 with a light transmittance of about 100%, and a second region 36 with the light transmittance continuously changing stepwise are continuously formed in a circumferential direction of the transparent glass board 32. The second region 36 is formed by dividing, and changing the thickness of the ND coat 38, which is an optical film, into three stages in small regions 40, 42 and 44. A transparent resin board may be used as the base material in place of the transparent glass board 32. Both the transparent glass board 32 and the transparent resin board have favorable light transmittances and can be easily produced. Further, the light transmittance of the first region 34 is not limited to about 100%, and the ND coat 38 may be formed in this region so that the light transmittance may be made less than 100%, but the higher the transmittance, the better.

The first region 34 is formed in the range of 144° in the counterclockwise direction with a horizontal reference line H horizontally extending to the right side in Fig. 4 set as 0°. Further, the second region 36 is formed to continue from the first region 34 in the range of 216° from the position at 144° to 360°. The small region 40 constituting the second region 36 is formed in the range of 72° from the position at 144° to 216°. The small region 42 is formed in the range of 72° from the position at 216° to 288°, and the small region 44 is formed in the range of 72° from the position at 288° to 360°. The light transmittance of the small region 40 is set at 25% (1/4) by the thickness of the ND coat 38. The light transmittance of the small region 42 is set at 6.3% (1/16), and the light transmittance of the small region 44 is set at 1.6% (1/64).

Further, an antireflection film 46 is formed on the surfaces (surfaces at the side of the lens device 16) of the first regions 34 and the second region 36. The antireflection film 46 with a reflectivity of less than 2% in 420 nm to 660 nm, which is required for the optical component of a camera, is used.

The ranges of the first region 34, the second region 36, and the small regions 40, 42 and 44 are not limited to the above described ranges, and are properly set. Further, in the embodiment, the three small regions 40, 42 and 44 are formed so that the light transmittances of 1/4n are changed stepwise, but the light transmittance which is changed stepwise, and the number of small regions are not limited to them, and the light transmittance can be properly set in accordance with the use purpose and object. Further, the number of divisions of the small regions is not limited to the above described three regions 40, 42 and 44, and may be any number if only it is two or more.

The ND filter 10 thus constituted is rotatably supported by the filter rotating mechanism 30 shown in Fig. 3 via a pin 48 fixed to an aperture 11 of its center.

Further, the posture of the ND filter 10 when its center angle in the angle range of the first region 34 with the light transmittance of about 100% is aligned with an optical axis P of the image light is set as a home position. From this posture, the ND filter 10 is rotated to the region with a smaller light transmittance from the region with a larger light transmittance with respect to a passage area 50 of the image light, for example.

The filter rotating mechanism 30 has a housing 52 which rotatably supports the ND filter 10 via the pin 48, and a gear train which rotatably drives the ND filter 10 is rotatably mounted to a front board 52A of the housing 52.

The gear train is constituted of gears 56, 58 and 60 directly connected to an input shaft 54 and a gear 62 directly connected to the pin 48 as shown in Fig. 3A. Accordingly, when the input shaft 54 is rotated in one direction, the ND filter 10 is rotated around the pin 48.

As the drive force which rotates the ND filter 10, the ND filter 10 may be rotated by electric power by connecting the output shaft of a motor to the input shaft 54, or may be rotated manually by a cameraperson by projecting the input shaft 54 outward from the camera main body 14.

When a cameraperson moves from bright outdoors to the dark interior of a building while continuing photographing by regulating the amount of received light by manually rotating the ND filter 10, the cameraperson can perform photographing while continuously regulating the amount of received light. For example, when the small region 44 with a light transmittance of 1.6% is used in the case of excessively bright outdoors, and the first region 34 with a light transmittance of about 100% is used in the case of the excessively dark interior of a building, photographing can be performed while the amount of received light during that while is changed stepwise in the small region 42 and the small region 44.

Further, the electric regulation and manual regulation are described in the aforementioned example, but automatic regulation may be performed. More specifically, a light amount sensor is provided at the television camera 12, and the ND filter 10 may be automatically controlled electrically based on the brightness of a photographing place which is output from the light amount sensor so that when the photographing place is excessively bright, the amount of received light is decreased, and when the place is excessively dark, the amount of received light is increased.

Furthermore, if the light amount is regulated by properly rotating the ND filter 10, photographing can be performed with an f number with high resolving power of the lens used without rotating the iris ring of the lens, and therefore, a video with good quality can be obtained.

Meanwhile, in the ND filter 10 of the embodiment, the first region 34 and the second region 36 are continuously formed in the circumferential direction of the transparent glass board 32, and therefore, image light transmits through all the regions of the transparent glass board 32.

Thereby, the region where image light does not transmit does not traverse the passage area 50 of the image light at the time of operation of light amount regulation, and therefore, the screen does not become dark momentarily at the time of operation of light amount regulation. Therefore, by using the ND filter 10, a video with favorable quality which does not give sense of discomfort to a viewer can be obtained.

Further, according to the ND filter 10 of the embodiment, the antireflection film 46 is formed on the surfaces of the first region 34 and the second region 36, and therefore, reflection of image light can be suppressed by the antireflection film 46. Accordingly, if the ND filter 10 is used, occurrence of a ghost can be suppressed, and an image with favorable quality can be obtained.

Further, according to the television camera 12 equipped with the ND filter 10 of the embodiment, a video with favorable quality which does not give sense of discomfort to a viewer can be obtained similarly to the effect of the single ND filter 10.

Giving some supplementary explanation to the manufacturing method of the ND filter 10, when a deposition substance is vacuum-evaporated, the area shut off with a metal member or the like so that the deposition substance does not attach to the area, and the area which is not shut off have different density transmittances, and therefore, by repeating these operations in each area, a plurality of different transmittances can be obtained. Further, the antireflection film 46 can be applied to the entire surface by one deposition by regulating the optical constant of the deposition substance for antireflection.

Further, the ND filter can be constructed by assembling a plurality of sector ND filters differing in densities in the disk shape, but in such a case, the light which is irregularly reflected becomes flare at the boundary portions in which a plurality of sector filters are connected, and degrades the video quality. Further, since a plurality of sector shapes are assembled, inclination precision to the optical axis of each area (each piece) slightly differs, the light beam is curved, and when switched, the position of an image is likely to move slightly. Therefore, according to the ND filter 10 of the embodiment with one transparent glass board 32 as a base material, such a trouble does not occur.

Describing one example of the manufacturing method of the aforementioned ND filter 10 in concrete, the ND coat 38 of a predetermined thickness is deposited on only the small region 44 first by using a jig with an angle of aperture of 72° to form the ND filter with the light transmittance (1/64), and the antireflection film 46 is formed on the small region 44. Next, by using the jig with the angle of aperture of 72°, the ND coat 38 of a predetermined thickness is deposited on only the small region 42, the ND filter with the light transmittance (1/16) is formed, and the antireflection film 46 is formed on the small region 42. Next, by using a jig with the angle of aperture of 72° is used, the ND coat 38 of a predetermined thickness is deposited on only the small region 40, the ND filter with the light transmittance (1/4) is formed, and the antireflection film 46 is formed on the small region 40. Thereby, the ND coat 38 is formed stepwise on the region 36, and the antireflection film 46 is formed on the surface layer thereof. Finally, by using a jig with an angle of aperture of 144°, the antireflection film 46 is formed on the region 34. According to this procedure, the ND filter 10 is produced.

The ND filter 10 can be produced without any problem by the aforementioned manufacturing method, but there is the following cause for concern.

When the ND filter with different densities is formed by dividing a disk-shaped transparent member, the ND coat 38 of a predetermined thickness is ordinarily formed in each of small regions 40, 42 and 44 by setting an individual condition to each region, and due to variation in jig precision and variation in manufacture, variation occurs to the finished quality of the edges of the ND coat 38 of the small regions 40, 42 and 44.

More specifically, the ND coats 38 with different ND densities adjacent to each other in the boundary of the small regions 40, 42 and 44 may overlay one another, and a gap may occur to the boundary. The overlapping portions have the transmittance lower than those of the small regions at both sides, and since the portion with a gap becomes transparent, the portion with such a gap has a transmittance higher than those of the small regions at both sides. Therefore, due to these causes of concern, the singular point of the transmittance is sometimes formed on the disk on which the ND filter is formed.

Further, a region of "spread" where the transmittance and reflectivity cannot be controlled generally exists on the outer peripheral portion of a coat area, and "spreads" of two coats overlap at one point. Therefore, there is the problem of increasing the fear of an adverse effect of irregular reflection and the like. In order to eliminate such a problem, the influence of the edges of the ND coat 38 in the boundary of the divided small regions 40, 42 and 44 has to be minimized.

The manufacturing method of the ND filter which will be described hereinafter eliminates the above described causes of concern, and is the manufacturing method of the embodiment of the invention of the present application. More specifically, the manufacturing method of the embodiment is a manufacturing process in which while the region to be coated is extended to each of small regions 40, 42 and 44 from the small region 44 with a high finished ND density toward the small regions 42 and 40 with low ND densities in all the regions on which the ND coat 38 is formed, coating is applied to the small regions 42 and 40 at the downstream side from the small region 44 at the upstream side, and thereby, variation in the finished quality of the edges of the coat area can be suppressed to the minimum.

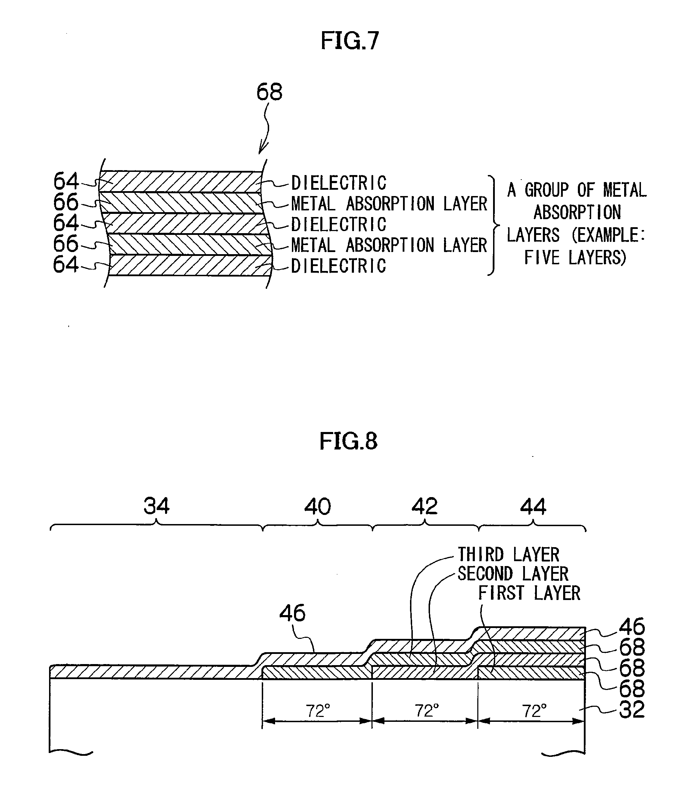

Describing with the ND filter 10 shown in Figs. 4 and 5 taken as an example, the ND coat is made one absorption layer group 68 in which three dielectric layers 64, 64 and 64, and two metal absorption layers 66 and 66 are alternately stacked in five layers as shown in Fig. 7. In this example, the dielectric layer 64 is of [MgF₂], and the metal absorption layer 66 is [inconel] (trade name by Inco Ltd.: the metal film with Ni as a main component).

As in Fig. 8, three of the absorption layer groups 68 are stacked in layers on the small region 44 with the light transmittance (1/64), two of the absorption layer groups 68 are stacked in layers on the small region 42 with the light transmittance (1/16) and one absorption layer group 68 is placed on the small region 40 with the light transmittance (1/4), whereby a desired light transmittance is obtained, and the uniform antireflection film 46 is finally formed on the transparent glass board 32 to obtain an effective antireflection effect.

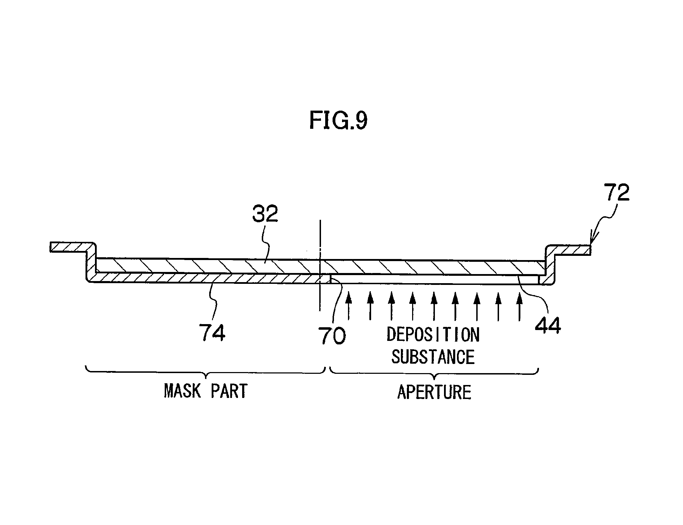

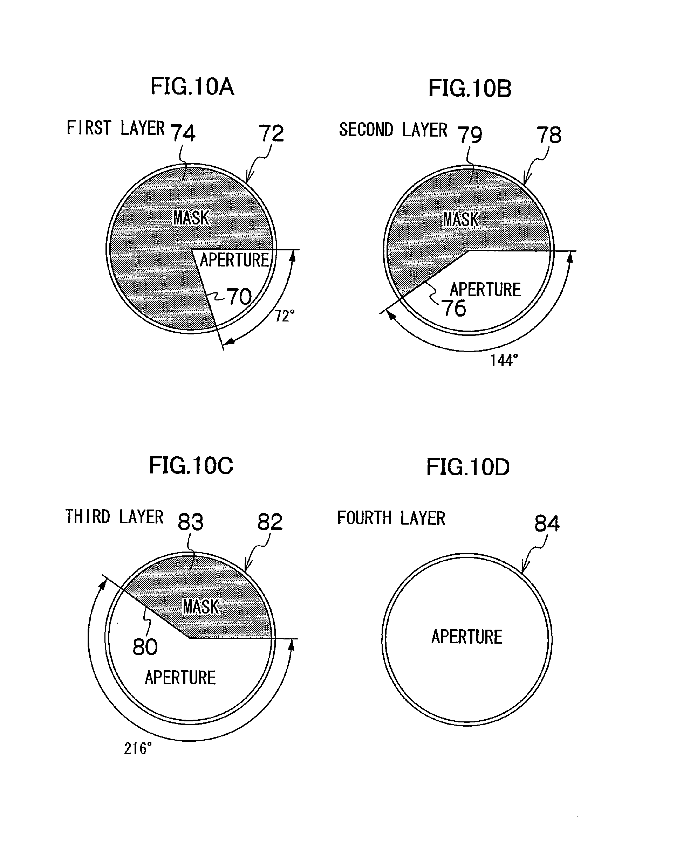

More specifically, the first absorption layer group 68 is formed on the small region 44 which ultimately has the light transmittance (1/64) first. During formation, the transparent glass board 32 is held in a coat furnace, and as shown in Figs. 9 and 10A, a jig 72 called a coat fixture with an aperture 70 having an angle of aperture of 72° being formed is used for only the small region 44 on which the ND coat is desired to be formed. More specifically, the absorption layer group 68 which is a deposition substance is formed on the small region 44 via the aperture 70. In this case, the other regions 34, 40 and 42 are covered with a mask portion 74 of the jig 72, and therefore, the first absorption layer group 68 is not deposited thereon.

Next, the second absorption layer group 68 is formed on the small region 44 and the small region 42 which ultimately has the light transmittance (1/16) as in Fig. 8. In this case, a jig 78 in which an aperture 76 having an angle of aperture of 144° is used as shown in Fig. 10B. The other regions 34 and 40 are covered with a mask portion 79 of the jig 78, and therefore, the second absorption layer group 68 is not deposited thereon.

Next, the third absorption layer group 68 is formed on the small regions 44 and 42 and the small region 40 which ultimately has the light transmittance (1/4) as shown in Fig. 8. In this case, a jig 82 in which an aperture 80 having an angle of aperture of 216° is used as shown in Fig. 10C. Further, the other region 34 is covered with a mask portion 83 of the jig 82, and therefore, the third absorption layer group 68 is not deposited.

Finally, the antireflection film 46 is formed on the entire transparent glass board 32 including the region 34 to be a transparent filter. In this case, a ring-shaped jig 84 with an angle of aperture of 360° (holding only the outer peripheral portion of the member) can be used as in Fig. 10D.

According to the ND filter 10 manufactured by such a manufacturing process, the problem that the edges of the ND coat adjacent in the small regions 40, 42 and 44 overlay one another and the problem that gaps are formed can be eliminated. Therefore, even if the brightness of the photographing environment momentarily changes, a ghost is prevented and video is not discontinued, and video without sense of discomfort can be provided.

Further, the ND coat is constituted of the absorption layer group 68 in which a plurality of dielectric layers 64 and metal absorption layers 66 are alternately stacked in layers, whereby the reflectivity can be suppressed to less than 2% which is necessary for the optical components of a camera, for example, by the interference action of light by a plurality of dielectric layers 64 and metal absorption layers 66 which are alternately stacked in layers, and the light transmittance can be regulated to a desired value by a plurality of metal absorption layers 66. Further, as the antireflection film 46 of the embodiment, the one formed by stacking dielectric layers [MgF₂] and [ZrO₂] alternately in two layers is used.

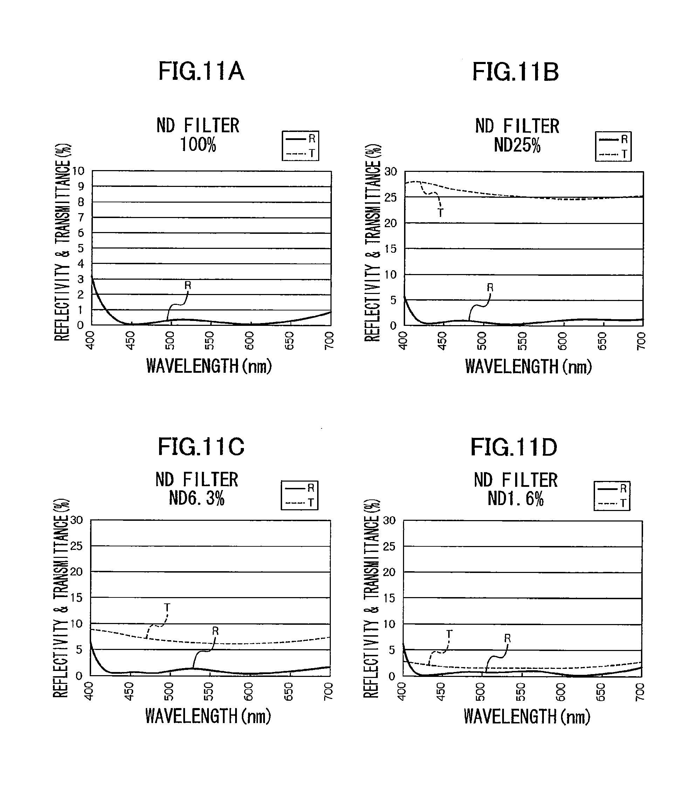

Figs. 11A to 11D are graphs each showing the relationship of the reflectivity (%) and the light transmittance (%) with respect to the wavelength (nm) when the light transmittance of 1/4ⁿ is changed in three stages, by obtaining the relationship by a known arithmetic expression.

The axis of ordinates of each of the graphs represents reflectivity (%) and light transmittance (%), and the axis of abscissa represents the wavelength (nm). The reflectivity (%) is shown by (R), and the light transmittance (%) is shown by (T), respectively. The wavelength range which is generally used as a camera is 420 to 660 (nm).

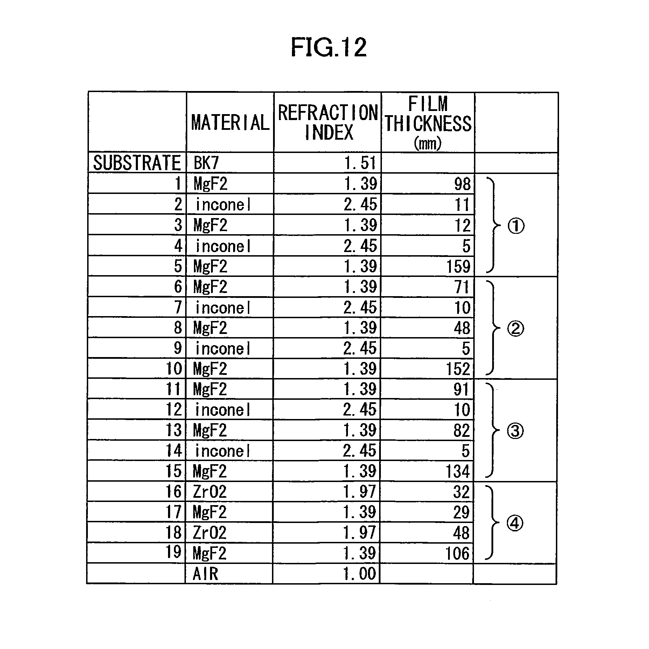

Further, Fig. 12 shows a mathematical table as one example of the film constitution which realizes the present invention. This mathematical table shows the layer constitution showing the respective refractive indexes and film thicknesses of the dielectric layer [MgF₂], and the metal absorption layer [inconel] of the absorption layer group, and the dielectric layer [MgF₂] and [ZrO₂] of the antireflection film. (1) shows the first absorption layer group, (2) shows the second absorption layer group, (3) shows the third absorption layer group, and (4) shows the antireflection film. The film constitution shown in the present mathematical table is one example of the embodiment, the film substances and the thickness of each of the layers are not limited to those in the present mathematical table, and they are optional if only the dielectric layers and the metal absorption layers are alternately stacked in layers.

As shown in Fig. 12, the refraction index of the dielectric layer [MgF₂] which constitutes the surface of the absorption layer group is 1.39, and the refraction index of the transparent board (transparent glass board) which is a base material is 1.51. The refraction indexes of the transparent board and the dielectric layer [MgF₂] are preferably made substantially the same like this. More specifically, in the ND filter of the embodiment, the common antireflection film is added to the transparent board and the absorption layer group, and therefore, the refractive indexes of the transparent board which is a base part of the antireflection film and the surface of the absorption layer group are idealistically the same, but by making the refraction indexes substantially the same (±0.2), the common antireflection film is enabled.

Further, the materials ([MgF₂]) of the members which are located on the interfaces between the stacked absorption layer groups are preferably the same. By adopting the same material ([MgF₂]) for the members located on the interface between the absorption layer groups when the absorption layer groups are stacked in layers, the joints of the absorption layer groups have the same refraction indexes. Consequently, the layer of one substance is made optically, and therefore, the interference action can be controlled by setting the thickness of the dielectric layer to be optimum.

The region 34 (see Fig. 8) with the light transmittance of 100% shown in Fig. 11A has a reflectivity of less than 2% in the wavelength range of 420 to 660 (nm), and therefore, there is no problem as the optical component of a camera.

Further, in the region 40 (see Fig. 8) which aims at a light transmittance of 25% shown in Fig. 11B, the light transmittance of the calculation result is substantially 25% in the wavelength range of 420 to 660 (nm). Further, the reflectivity can be suppressed to less than 2% in the wavelength range of 420 to 660 (nm).

Further, in the region 42 (see Fig. 8) which aims at a light transmittance of 6.3% shown in Fig. 11C, the light transmittance of the calculation result is substantially 6.3% in the wavelength range of 420 to 660 (nm). Further, the reflectivity can be suppressed to less than 2% in the wavelength range of 420 to 660 (nm).

Further, in the region 44 which aims at a light transmittance of 1.6% shown in Fig. 11D, the light transmittance of the calculation result is substantially 1.6% in the range of 420 to 660 (nm). Further, the reflectivity can be suppressed to less than 2% in the wavelength range of 420 to 660 (nm).

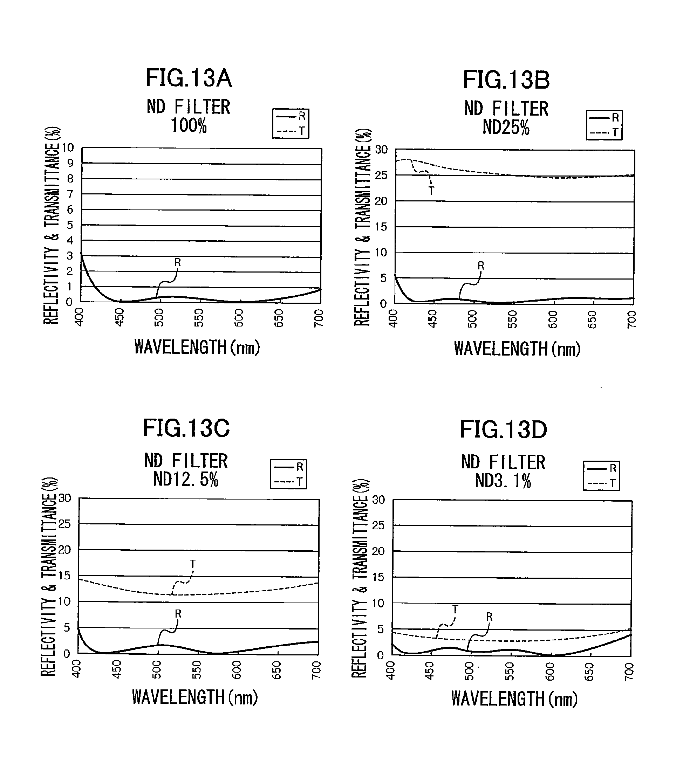

Fig. 13 shows a modified example. In this case, the graph shows the relationship of the reflectivity (%) and the light transmittance (%) with respect to the wavelength (nm) in the case of changing the light transmittance in three stages (1/2², 1/2³, 1/2⁵), by obtaining the relationship by the arithmetic expression.

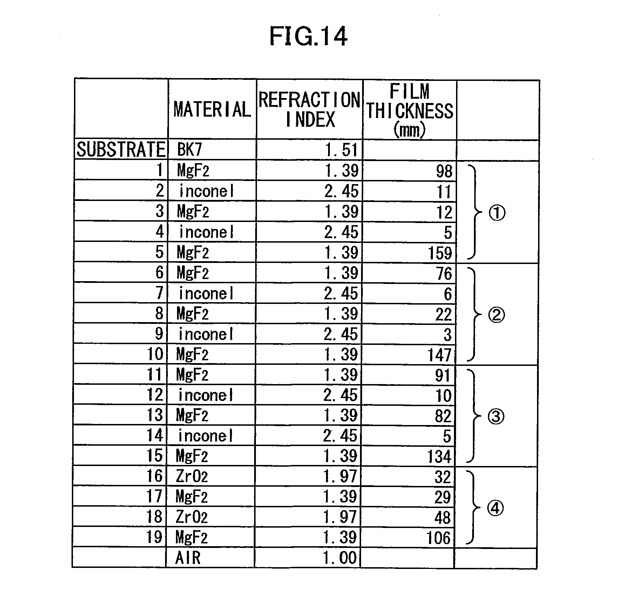

Further, Fig. 14 shows a mathematical table as one example of the film constitution which realizes the present invention. The mathematical table shows the layer constitution showing the refractive index and the thickness of each of the dielectric layer [MgF₂] and the metal absorption layer [inconel] of the absorption layer group, and the dielectric layers [MgF₂] and [ZrO₂] of the antireflective film. (1) shows the first absorption layer group, (2) shows the second absorption layer group, (3) shows the third absorption layer group and (4) shows the antireflection film. The film constitution shown in the mathematical table is one example of the embodiment, and the film substances and the layer thickness of each of the layers are not limited to those of the present mathematical table, and they may be optional if only the dielectric layers and the metal film layers are alternately stacked.

The region with a light transmittance of 100% shown in Fig. 13A has a reflectivity of less than 2% in the wavelength range of 420 to 660 (nm), and therefore, there is no problem as the optical component of a camera.

Further, in the region which aims at a light transmittance of 25% (1/2²) shown in Fig. 13B. the light transmittance of the calculation result is substantially 25% in the wavelength range of 420 to 660 (nm). Further, the reflectivity can be suppressed to less than 2% in the wavelength range of 420 to 660 (nm).

Further, in the region which aims at a light transmittance of 12.5% (1/2³) shown in Fig. 13C, the light transmittance of the calculation result is substantially 12.5% in the wavelength range of 420 to 660 (nm). Further, the reflectivity can be suppressed to less than 2% in the wavelength range of 420 to 660 (nm).

In the range which aims at a light transmittance of 3.1% (1/2⁵) shown in Fig. 13D, the light transmittance of the calculation result is substantially 3.1% in the range of 420 to 660 (nm). Further, the reflectivity can be suppressed to less than 2% in the wavelength range of 420 to 660 (nm).

Meanwhile, in the embodiment, the manufacturing method for forming the absorption layer groups 68 in sequence to the wide area from the narrow area is described as shown in Figs. 10A to 10D, but the manufacturing method is not limited to this. More specifically, as in the manufacturing method of another embodiment of the present invention, the ND filter 10 may be manufactured by being formed in sequence from the wide area to the narrow area.

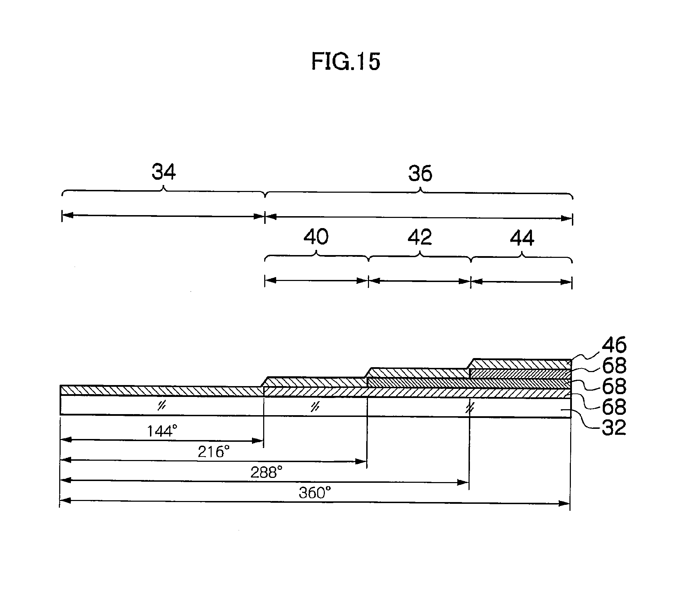

More specifically, the first absorption layer group 68 is formed on all the small regions 44, 42 and 40 on which the ND coat is formed as shown in Fig. 15. Next, the second absorption layer group 68 is formed on the small regions 44 and 42 except for the region 40 which ultimately has the maximum transmittance. Next, the third absorption layer group 68 is formed on the small region 44 except for the small regions 40 and 42. More specifically, a plurality of absorption layer groups 68 and 68 (two layer groups on the small region 42, and the three layer groups on the small region 44) are stacked in layers in the thickness direction on the small regions 42 and 44 except for the small region 40. Finally, the antireflection film 46 is formed on the regions 36 and 34 (entire transparent board).

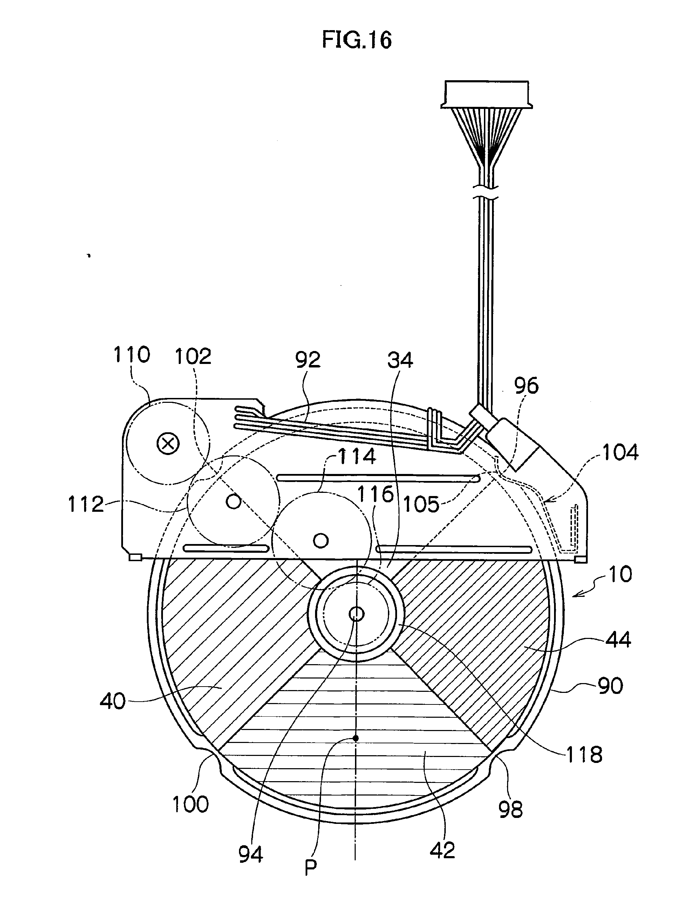

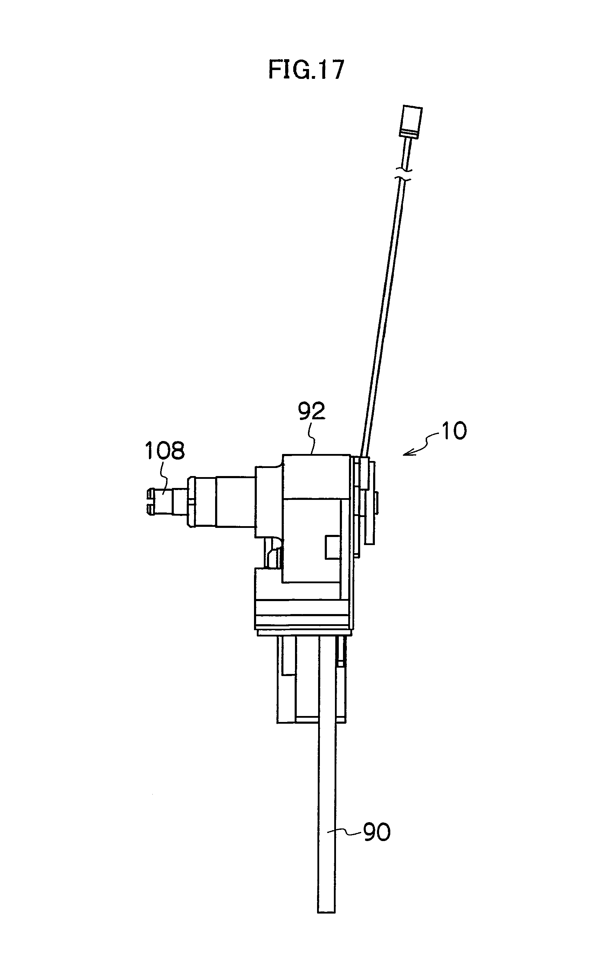

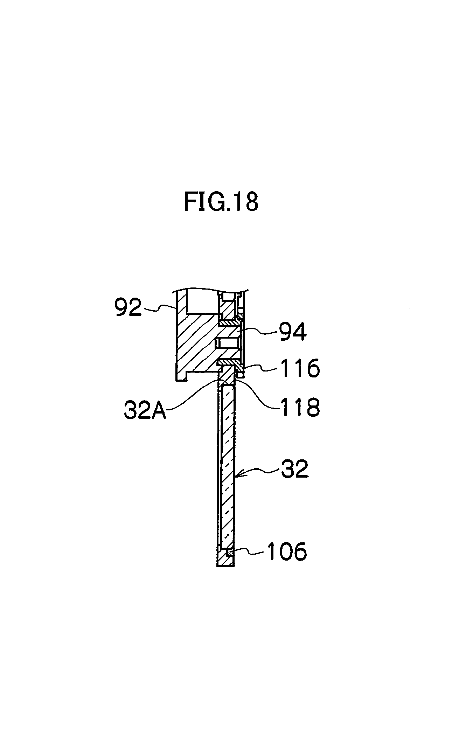

Fig. 16 is a front view of the ND filter 10 in which a ring-shaped frame member 90 is attached to the peripheral edge portion of the transparent glass board 32. Further, Fig. 17 is a left side view of Fig. 16, and Fig. 18 is a sectional view of a major portion of Fig. 16.

In the ND filter 10 shown in Fig. 16, the first region 34, and the small regions 40, 42 and 44 of the second region 36 are arranged at intervals of 90 degrees. When the ND filter 10 is rotated by each 90 degrees about a pin 94 provided at a housing 92, the center portion of each of the first region 34 and the small regions 40, 42 and 44 is positioned so as to coincide with the optical axis P.

In order to position the center portion of each of the regions 34, 40, 42 and 44 at the optical axis P, in the ND filter 10 according to the embodiment, recessed portions 96, 98, 100 and 102 are provide at the peripheral edge portion of the frame member 90, and a leaf spring (urging member) 104 which engages with one of the recessed portions 96, 98, 100 and 102 is provided at the housing 92.

The recessed portions 96 to 102 are provided at intervals of 90 degrees on the peripheral edge portion of the frame member 90. When the curved portion 105 of the leaf spring 104 is engaged with the recessed portion 96 as shown in Fig. 16, the center portion of the small region 42 is positioned at the optical axis P. Further, when the ND filter 10 is rotated by 90 degrees in the counterclockwise direction in Fig. 16, the curved portion 105 of the leaf spring 104 is engaged with the recessed portion 98, so that the center portion of the small region 40 is positioned at the optical axis P. Similarly, when the ND filter 10 is further rotated by 90 degrees in the counterclockwise direction, the curved portion 105 of the leaf spring 104 is engaged with the recessed portion 100, so that the center portion of the region 34 is positioned at the optical axis P. When the ND filter 10 is further rotated by 90 degrees in the counterclockwise direction, and when the curved portion 105 of the leaf spring 104 is engaged with the recessed portion 102, the center portion of the small region 44 is positioned at the optical axis P. In this way, the center portion of each of the regions 34, 40, 42 and 44 is positioned at the optical axis P.

The material of the frame member 90 is metal or resin. When the frame member 90 is made of metal, the recessed portions 96 to 102 can be provided on the frame member 90 by press forming. Further, when the frame member 90 is made of resin, the recessed portions 96 to 102 can be provided on the frame member 90 by injection molding.

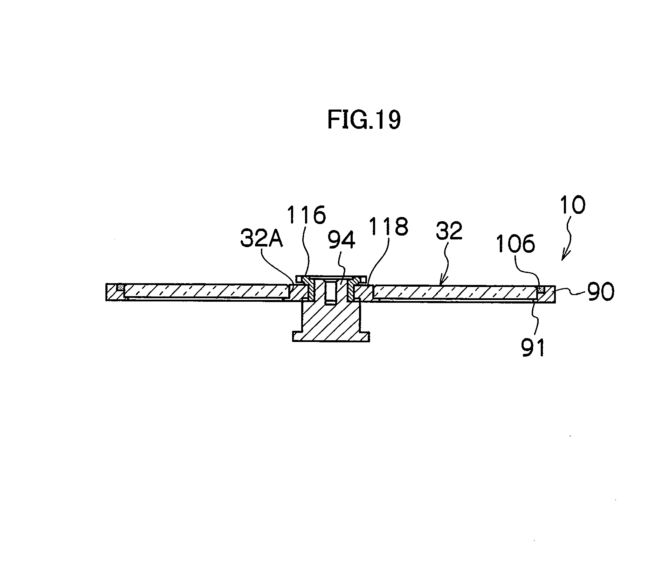

When the frame member 90 is made of metal, a flange 91 is provided at the inner peripheral portion of the frame member 90 as shown in Fig. 19. The glass board 32 and the frame member 90 are fixed to each other in such a manner that the glass board 32 is dropped to the flange 91, and that an adhesive 106 is applied to the gap between the outer peripheral portion of the glass board 32 and the inner peripheral portion of the frame member 90. Further, when the frame member 90 is made of resin, the glass board 32 and the frame member 90 can also be similarly fixed using the adhesive 106. However, from the viewpoint of mass productivity, the glass board 32 and the frame member 90 are preferably integrated with each other by molding the resin on the peripheral edge portion of the glass board 32.

As shown in Fig. 17, an input shaft 108 is rotatably provided on the rear surface side of the housing 92. A gear 110 shown by the two-dot chain line in Fig. 6 is connected coaxially with the input shaft 108. The gear 110 is in mesh with a gear 112 journaled by the housing 92, and the gear 112 is similarly in mesh with a gear 114 journaled by the housing 92. Further, the gear 114 is in mesh with a ring-shaped gear 116.

As shown in Fig. 18, the gear 116 is configured such that the inner peripheral portion of the gear 116 is rotatably fitted to the pin 94 provided at the housing 92, and such that the outer peripheral portion of the gear 116 is fixed to the inner peripheral portion of a ring-shaped holder 118. The inner peripheral portion of an aperture 32A formed at the center portion of the glass board 32 is fixed to the outer peripheral portion of the holder 118.

Therefore, when the input shaft 108 is manually or electrically rotated, the rotating force of the input shaft 108 is transmitted to the gears 110, 112, 114 and 116, so that the glass board 32, that is, the ND filter 10 is rotated about the pin 94.

In the ND filter 10 according to the embodiment, each of the regions 34, 40, 42 and 44 is positioned at the optical axis P by the recessed portions 96 to 102 and the leaf spring 104. Thus, the ND filter 10 according to the embodiment is suitable for the case where it is manually operated by a cameraperson.

The leaf spring 104 is fixed to the inner side of the housing 92. Further, the curved portion 105 of the leaf spring 104 is arranged to face the peripheral edge portion of the frame member 90, and is always brought into press contact with the peripheral edge portion of the frame member 90 with a predetermined urging force. Therefore, when the ND filter 10 is rotated, the peripheral edge portion of the frame member 90 is circumferentially moved in a state of receiving the urging force from the leaf spring 104.

Meanwhile, in the ND filter using the disk-shaped transparent glass board as a base material, when the recessed portion for positioning is to be directly provided at the peripheral edge portion of the transparent glass board, the following problems occur.

First, it is very difficult to work the glass board so as to form the recessed portion on the glass board. That is, the recessed portion is formed by cutting the peripheral edge portion of the glass board by a rotating grinding wheel, but it is very difficult to perform the cutting work without causing a chipping and a notch at the recessed portion at the time of the cutting work. Further, when the chipping and the notch are caused at the recessed portion, the glass board itself may be broken from the recessed portion as the starting point.

Next, the urging force of the leaf spring is directly transmitted to the glass board, so that the glass board is distorted to deteriorate the flatness of the glass board. This becomes the cause of deterioration of the optical characteristics of the ND filter.

Further, the peripheral edge portion of the glass board, which portion is the sliding surface against the leaf spring, is easily scraped by the urging force of the leaf spring. This becomes the cause of the problem that the glass powder produced by the scraping adheres to other optical members to deteriorate the optical performance of a camera or a lens.

Thus, in the ND filter 10 according to the embodiment, the ring-shaped frame member 90 is provided at the peripheral edge portion of the glass board 32. Further, the recessed portions 96 to 102, with which the leaf spring 104 is engaged, are provided on the frame member 90, to thereby solve the above described problems, that is, the problem associated with the working, the problem of deterioration of the optical characteristics of the ND filter, and the problem of deterioration of the optical performance of the camera and the lens.

Thereby, the ND filter 10 according to the embodiment can be excellently used by being mounted to the camera or the lens.

As the material of the frame member 90, a metal, such as aluminum and stainless steel, or a resin, such as polycarbonate containing glass fibers having high hardness and stiffness, is preferably used. Since the frame member 90 made of such a material can be easily worked to form the recessed portions 96 to 102 thereon, it is possible to solve the problem associated with the working.

Further, since the glass board 32 is reinforced by the frame member 90, it is possible to prevent that the glass board 32 is distorted by the urging force of the leaf spring 104. Thereby, the problem of deterioration of the optical characteristics of the ND filter 10 can be solved.

Further, since the frame member 90 is not easily scraped by the urging force of the leaf spring 104, the problem of deterioration of the optical characteristics of the lens can also be solved.

Note that in order to reduce the sliding resistance between the leaf spring 104 and the frame member 90, when the frame member 90 is made of the metal, the peripheral edge portion of the frame member 90, which portion is the sliding surface against the leaf spring 104, is preferably coated with a resin material having lubricity.

## Claims

1. An ND filter (10), **characterized by** comprising:
A transparent board formed in a disk shape,
wherein two or more regions having light transmittances differing stepwise from one another are continuously formed in a circumferential direction of the transparent board (32) formed in a disk shape.

2. The ND filter according to claim 1,
wherein the transparent board is one of a glass board and a resin board.

3. The ND filter according to claim 1 or 2,
wherein an antireflection film (46) is formed on surfaces of the two or more regions.

4. The ND filter according to claim 3,
wherein in all regions in which the transparent board (32) is equipped with an ND coat, a first region with a lowest transmittance of all the regions is equipped with an ND coat of a first layer, the first region and a second region with a second lowest transmittance are equipped with an ND coat of a second layer, whereby a plurality of ND coats are stacked in layers in a thickness direction on the regions except for a region with a highest transmittance, and a surface layer of the entire transparent board is equipped with the antireflection film.

5. The ND filter according to claim 3,
wherein in all regions in which the transparent board (32) is equipped with an ND coat,
all the entire regions are equipped with an ND coat of a first layer, regions except for a region with a highest transmittance of all the regions are equipped with an ND coat of a second layer, whereby a plurality of ND coats are stacked in layers in a thickness direction on the regions except for the region with the highest transmittance, and a surface layer of the entire transparent board is equipped with the antireflection film.

6. The ND filter according to claim 4 or 5,
wherein the ND coat is an absorption layer group (68) in which a plurality of dielectric layers (64) and metal absorption layers (66) are alternately stacked in layers.

7. The ND filter according to claim 6,
wherein refraction indexes of the transparent board and a dielectric layer to be a surface of the absorption layer group are substantially the same.

8. The ND filter according to claim 6 or 7,
wherein materials of members located on an interface between the stacked absorption layer groups are the same.

9. The ND filter according to claim 1,
wherein the transparent board is a glass board, wherein a ring-shaped frame member (90) is attached to the peripheral edge portion of the glass board, and wherein a recessed portion (96, 98, 100, 102) is provided on the peripheral edge portion of the frame member.

10. The ND filter according to claim 9,
wherein the material of the frame member is metal or resin.

11. The ND filter according to claim 9, further comprising:
a housing (92) which rotatably supports the ND filter by using the center of the ND filter as the center of rotation,
wherein an urging member (104) which engages with the recessed portion of the frame member with an urging force is provided at the housing.

12. A television camera (12), comprising the ND filter according to any one of claims 1 to 11.

13. A manufacturing method of an ND filter in which two or more regions having light transmittances differing stepwise from one another are continuously formed in a circumferential direction of a transparent board (32) formed in a disk shape, and an antireflection film (46) is formed on surfaces of the two or more regions, comprising the steps of:
in all regions in which the transparent board is equipped with an ND coat, firstly, forming an ND coat of a first layer on a first region with a lowest transmittance of all the regions;
secondly, forming an ND coat of a second layer on the first region and a second region with a second smallest transmittance, whereby a plurality of ND coats are stacked in layers in a thickness direction on the regions except for a region with a highest transmittance; and
finally, forming the antireflection film on the entire transparent board to manufacture the ND filter.

14. A manufacturing method of an ND filter in which two or more regions having light transmittances differing stepwise from one another are continuously formed in a circumferential direction of a transparent board (32) formed in a disk shape, and an antireflection film (46) is formed on surfaces of the two or more regions, comprising the steps of:
in all regions in which the transparent board is equipped with an ND coat, firstly, forming an ND coat of a first layer on all the regions;
secondly, forming an ND coat of a second layer on regions except for a region with a highest transmittance of all the regions, whereby a plurality of ND coats are stacked in layers in a thickness direction on the regions except for the region with the highest transmittance; and
finally, forming the antireflection film on the entire transparent board to manufacture the ND filter.

15. The manufacturing method of an ND filter according to claim 13 or 14,
wherein the ND coat is an absorption layer group (68) in which a plurality of dielectric layers (64) and metal absorption layers (66) are alternately stacked in layers.
